# EUROPEAN PATENT SPECIFICATION

(11) **EP 3 162 675 B1**
(45) Date of publication and mention of the grant of the patent: **19.09.2018**
(21) Application number: 16194963.1
(22) Date of filing: 21.10.2016
(51) Int. Cl.: B62H 3/06, B62H 3/08

(54) **BICYCLE FLOOR RACK**
FAHRRADBODENSTÄNDER
PORTE-VÉLO AU SOL

(30) Priority: 29.10.2015 IT UB20155102
(43) Date of publication of application: 03.05.2017
(73) Proprietor: Peruzzo, Paola, 36027 Rosa' VI (IT)
(72) Inventor: Peruzzo, Paola, 36027 Rosa' VI (IT)
(74) Representative: Modiano, Micaela Nadia

(56) References cited:
- DE-B3-102010 015 986
- GB-A- 2 245 238
- TW-U- M 360 180
- US-A1- 2007 164 065

## Description

The present invention relates to a bicycle floor rack.

Bicycle floor racks are currently known and widespread for the support of a single bicycle which comprise
- a resting base, constituted by metallic tubular elements that are variously bent and mutually welded or bolted and shaped so as to form a positioning opening for a bicycle wheel or the like,
- a fall arrester fork, which is extended upward in the active configuration from the resting base and is adapted to prevent the lateral fall of a wheel inserted therein; this fall arrester fork also is composed of metallic tubular elements, normally two parallel tubular elements and one curved terminal tubular element that is adapted to rigidly connect the parallel tubular elements.

The fork is generally coupled in a fixed and stable manner to the base by welding or is coupled by means of threaded elements.

These bicycle floor racks are convenient since they are particularly suitable for home use, for example in a garage where it is necessary to support a bicycle in a tidy manner.

Although these bicycle racks are widespread and appreciated, they have drawbacks.

A first drawback is linked to the structure substantially constituted by metallic tubular elements, which therefore have a certain weight and must be first bent and then mutually fixed so as to form the bicycle rack.

In particular, the fall arrester fork has its parallel tubular elements joined by a metallic tubular portion that is curved through 180° and affects in a relatively important manner the overall production costs of the finished bicycle rack.

These known bicycle racks are therefore relatively onerous both in terms of material used and in terms of processes and labor for assembly.

Moreover, these known bicycle racks have a substantially L-shaped contour that defines a certain space occupation when, if they are not being used, it is necessary to put them away on a shelf or in general store them in a tight containment compartment.

The space occupation of these known bicycle racks is a drawback also during storage and transport for manufacturers, distributors and retailers.

Conventional bicycle floor racks are disclosed in TW M 360 180 U, US 2007/164065 and GB 2 245 238 A.

Document TW M 360 180 U shows the preamble of claim 1.

The aim of the present invention is to provide a bicycle floor rack that is capable of obviating the mentioned drawbacks of bicycle racks of the known type.

Within this aim, an object of the invention is to provide a bicycle rack that is simpler and more economical in terms of production of the components and of assembly.

Another object of the invention is to provide a bicycle rack that is easier to put away and store during periods of nonuse.

Another object of the invention is to provide a bicycle rack with a functionality and stability that are not inferior to those of bicycle racks of the known type.

A further object of the invention is to provide a bicycle rack that has a smaller space occupation during storage, transport and display for sale.

In accordance with the invention, there is provided a bicycle floor rack as defined in the appended claims.

Further characteristics and advantages of the invention will become better apparent from the description of a preferred but not exclusive embodiment of the bicycle rack according to the invention, illustrated by way of nonlimiting example in the accompanying drawings, wherein:
Figure 1 is a perspective view of a bicycle rack according to the invention;
Figure 2 is a perspective view of a detail of the bicycle rack according to the invention in the active configuration;
Figure 3 is a sectional side view of the detail of Figure 2;
Figure 4 is a perspective view of a detail of the bicycle rack according to the invention in an intermediate configuration;
Figure 5 is a sectional side view of the detail of Figure 4;
Figure 6 is a sectional side view of a detail of the bicycle rack according to the invention in the inactive or nonuse configuration;
Figure 7 is a perspective view of the bicycle rack according to the invention in the inactive or nonuse configuration;
Figure 8 is a perspective view of a further detail of the bicycle rack according to the invention in an active configuration;
Figure 9 is a perspective view of the bicycle rack according to the invention in a constructive variation;
Figure 10 is a view of another constructive variation of the bicycle rack according to the invention;
Figure 11 is a view of a detail of a further constructive variation of the bicycle rack according to the invention.

With reference to the figures, a bicycle floor rack according to the invention is designated generally by the reference numeral 10.

The bicycle rack 10 comprises:
- a resting base 11 with a positioning opening 12 for a wheel of a bicycle or the like,
- a fall arrester fork 13, which is extended upward, in the active configuration, from the resting base 11, and is adapted to prevent the lateral fall of a wheel inserted therein.

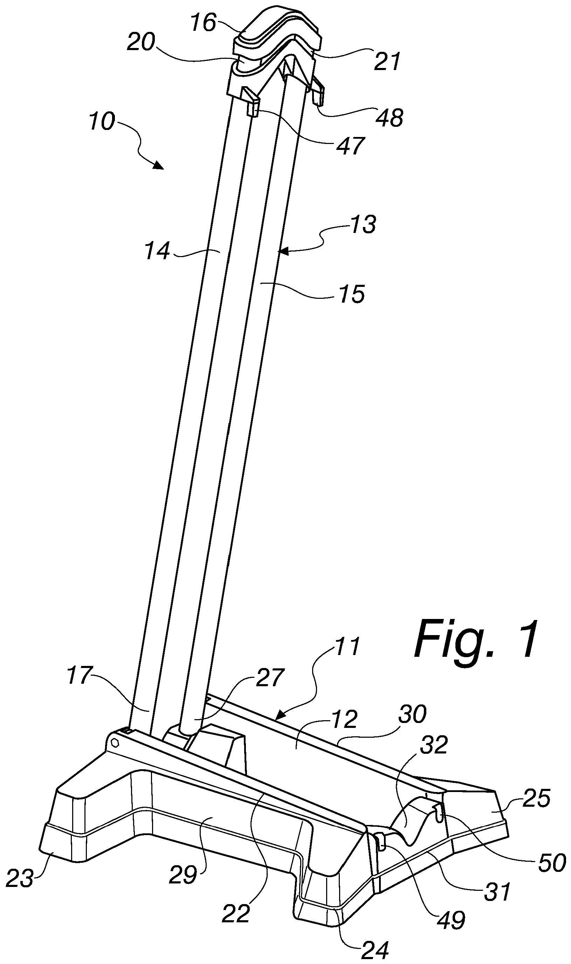

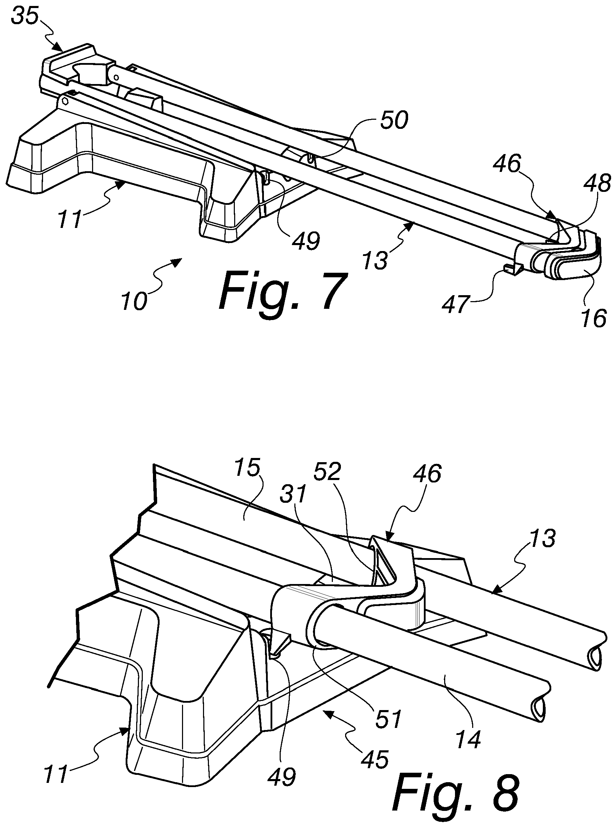

The particularity of the bicycle floor rack 10 according to the invention resides in that
- the resting base 11 is made of plastic material,
- the fork 13 is pivoted to said base and is designed to be arranged either in an inactive configuration, lowered onto the resting base 11, such as for example in Figure 7, or in an active configuration, rotated upward, such as for example in Figure 1.

Means for the reversible locking of the fall arrester fork 13 in the active configuration are also present and are described better hereinafter.

The bicycle rack 10 also comprises reversible means for locking the fork 13 in the inactive configuration, which are also described hereinafter.

The fork 13 is composed of two tubular elements 14 and 15 and a connection beam 16.

Each of the tubular elements 14 and 15 has a first end, 17 and 27 respectively, that is pivoted by means of corresponding pivots 18 and 19 to the resting base 11, and has the second opposite end 20 and 21 fixed to the connection beam 16.

The tubular elements 14 and 15 are constituted for example by metallic profiles that have a circular cross-section.

Advantageously, the connection beam 16 is made of plastic material, being simpler and cheaper to provide and assemble with respect to the metallic tubular component bent through 180° that is typical of known bicycle floor racks.

The resting base 11 is constituted by a substantially annular body 22, which comprises for example four walls which are opposite in pairs, with four lateral angular tabs 23, 24, 25 and 26 for stabilizing the resting, and below which there are anti-slip rubber feet, not shown for the sake of simplicity.

The fork 13 is pivoted at a first front wall 28.

The tubular elements 14 and 15 are pivoted by means of the corresponding pivots 18 and 19 to respective side walls, a second wall 29 and a third wall 30.

The resting base 11 is completed by a fourth rear wall 31, which is provided with a recess 32 for facilitating the access of a bicycle wheel to the central positioning compartment 12 of the resting base 11.

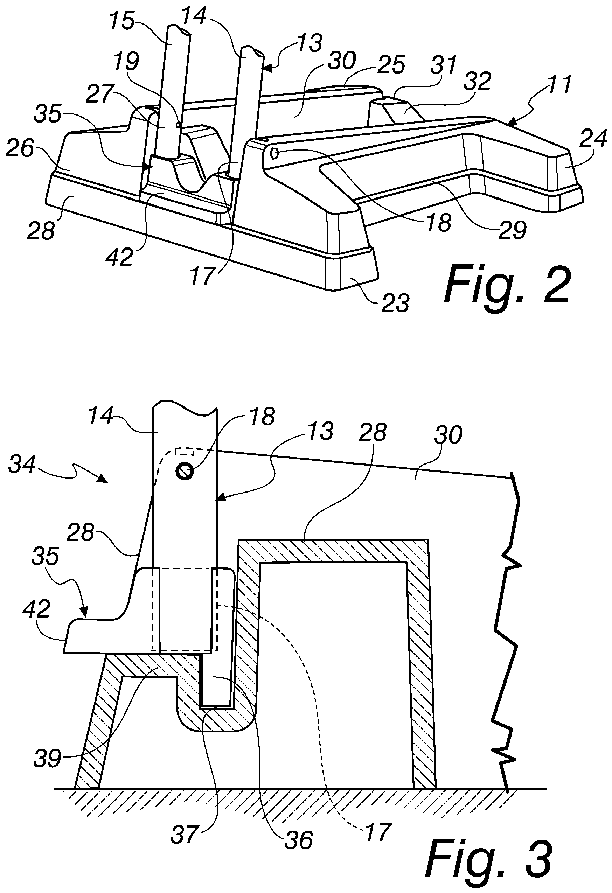

In the present embodiment of the invention, described herein by way of nonlimiting example of the invention, the reversible means for locking the fall arrester fork 13 in the active configuration, designated generally by the reference numeral 34 in the figures, comprise a first slider 35 that is arranged so as to slide on the tubular elements 14 and 15 of the fork 13 and comprises a rotation preventing tab 36, which is clearly visible in Figures 3, 5 and 6 and is designed to be inserted reversibly in a complementarily shaped seat 37 formed on the first front wall 28 of the resting base 11.

The operation of the reversible locking means 34 provides, in the active configuration of the bicycle rack 10, clearly visible in Figures 2 and 3, for the first slider 35 to be lowered at the first ends 17 and 27 with the rotation preventing tab 36 inserted in its seat 37.

In this configuration, the tab 36 cooperates with the walls of the seat 37 so as to prevent the rotation of the fork 13.

The first slider 35 rests against an abutment and stroke limiting portion 39 that is formed on the first wall 28.

In order to allow the rotation of the fork 13 and move the bicycle rack 10 so that it assumes an inactive configuration, i.e., a configuration for nonuse, with reduced space occupation, one proceeds as follows.

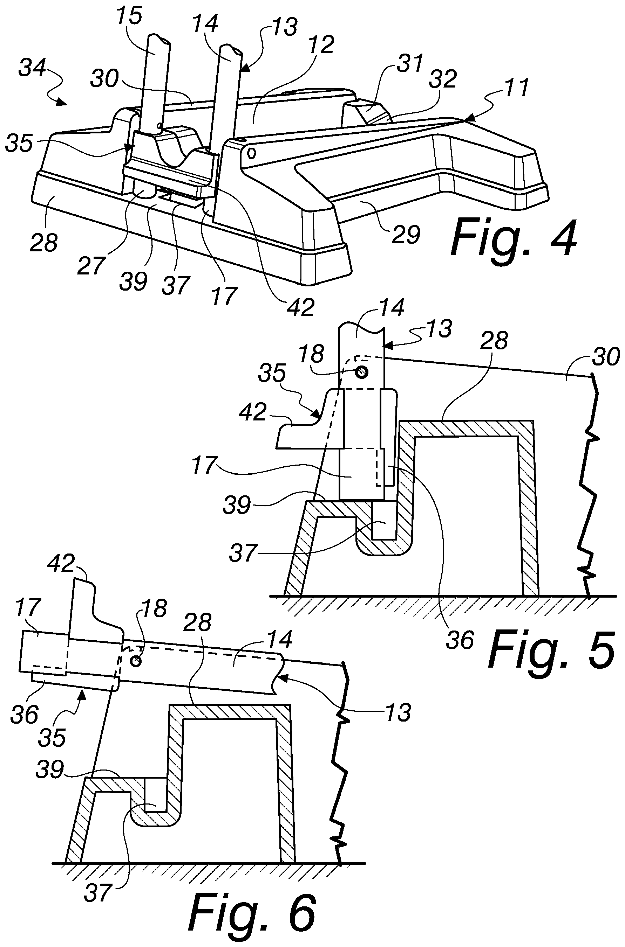

The first slider 35 is raised from its lowered position for resting on the abutment portion 39, extracting the rotation preventing tab 36 from its seat 37; this transition is clearly visible in Figures 4 and 5.

With the first slider 35 in this position, the fork 13 is free to rotate, lowering onto the resting base 11, as shown in Figures 6 and 7.

The first slider 35 is made of plastic material.

The first slider 35 is constituted by a block having such dimensions as to affect both of the tubular elements 14 and 15 of the fork 13 and has two opposite guiding channels 40 and 41 which are contoured to allow the sliding of the first slider 35 on the tubular elements 14 and 15.

In a constructive variation, not shown for the sake of simplicity, there is a first slider, with a rotation preventing tab, which slides on a single tubular element of the fork and not on both.

The first slider 35 is provided advantageously with a maneuvering protrusion 42, which is designed to facilitate the grip and movement of the first slider 35 on the part of a user.

In the present embodiment of the invention, described herein by way of nonlimiting example of the invention, the reversible means for locking the fork 13 in the inactive configuration are designated generally by the reference numeral 45 and comprise a second slider 46, which is arranged so as to slide on the tubular elements 14 and 15 and is provided with two lifting prevention tabs 47 and 48 designed to be inserted in corresponding seats 49 and 50 formed on the second rear wall 31, as shown in Figures 7 and 8.

Therefore, once the fork 13 has been arranged so as to be rotated downward on the resting base 11, the second slider 46, which is normally arranged in an intermediate position on the fork 13 so as to form an auxiliary resting element for a wheel fitted onto the fork 13, is translated until the lifting prevention tabs 47 and 48 enter the respective seats 49 and 50.

In this lifting prevention configuration, the fork 13 is prevented from rotating and therefore the inactive configuration or nonuse configuration of the bicycle rack 10 is rendered stable and safe.

The second slider 46 is made of plastic material.

The second slider 46 is constituted by a block whose dimensions are such as to affect both of the tubular elements 14 and 15 of the fork 13 and has two opposite guiding channels 51 and 52 that are contoured to allow the sliding of the second slider 46 on the tubular elements 14 and 15.

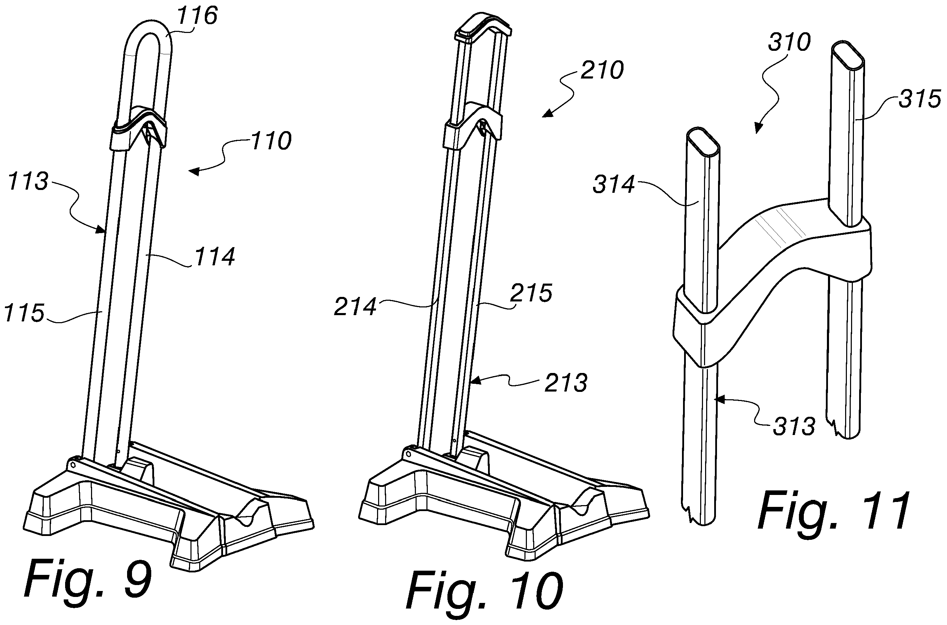

In a constructive variation of a bicycle floor rack according to the invention, exemplified in Figure 9 and designated therein by the reference numeral 110, the fork 113 is composed of two tubular elements 114 and 115 and a connection beam 116 constituted by a tubular metallic element bent through 180°, instead of being constituted by a beam made of plastic material as described above.

In another constructive variation of the bicycle floor rack according to the invention, exemplified in Figure 10 and designated therein by the reference numeral 210, the tubular elements 214 and 215 of the fork 213 have a quadrangular cross-section, for example a square cross-section.

In a further constructive variation of the bicycle floor rack according to the invention, exemplified in Figure 11 and designated therein by the reference numeral 310, the tubular elements 314 and 315 of the fork 313 have an elliptical cross-section.

The cross-section of the tubular elements is generally to be understood as being of any kind depending on the technical and aesthetic requirements of the manufacturer or buyer.

In practice it has been found that the invention achieves the intended aim and objects.

In particular, the invention provides a bicycle rack that is simpler and cheaper in terms of production of the components and in terms of assembly, by virtue of the resting base made of plastic material and of the other elements made of plastic material, such as the connection beam of the two tubular elements of the fork and the two sliders, the first rotation preventing slider and the second lifting prevention slider.

Moreover, the invention provides a bicycle rack that is easier to put away and store during periods of nonuse, by virtue of the reversible means for locking the fork in the active configuration and the reversible means for locking the fork in the inactive or nonuse configuration.

Moreover, the invention provides a bicycle rack whose functionality and stability are not inferior to bicycle racks of the known type.

Furthermore, the invention provides a bicycle rack that has a smaller space occupation during storage, transport and display for sale.

The invention thus conceived is susceptible of numerous modifications and variations, all of which are within the scope of the appended claims; all the details may further be replaced with other technically equivalent elements.

In practice, the components and the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A bicycle floor rack (10) comprising
- a resting base (11) with a positioning opening (12) for a wheel of a bicycle or the like,
- a fall arrester fork (13), which is extended upward, in an active configuration, from said resting base (11), and is adapted to prevent the lateral fall of a wheel inserted therein, said fall arrester fork (13) being pivoted to said base and designed to be arranged either in an inactive configuration, lowered onto the resting base (11), or in the active configuration, rotated upward,
- reversible means for locking said fall arrester fork (13) in the active configuration being provided,
**characterized in that** said reversible means (34) for locking said fall arrester fork (13) in the active configuration comprise a first slider (35) that is arranged to slide on tubular elements (14, 15) of the fork (13) and comprises a rotation-preventing tab (36) adapted to be inserted in a reversible manner in a complementarily shaped seat (37) formed on a first front wall (28) of the resting base (11).

2. The bicycle rack according to claim 1, **characterized in that** said resting base (11) is made of plastic material.

3. The bicycle rack according to one or more of the preceding claims, **characterized in that** it comprises reversible means for locking said fork (13) in the inactive configuration.

4. The bicycle rack according to one or more of the preceding claims, **characterized in that** said fork (13) is composed of said two tubular elements (14, 15) and a connection beam (16) made of plastic material.

5. The bicycle rack according to one or more of the preceding claims, **characterized in that** said tubular elements (14, 15) each have a first end (17, 27) pivoted by means of corresponding pivots (18, 19) to the resting base (11), and the second opposite end (20, 21) fixed to the connection beam (16).

6. The bicycle rack according to claim 5, **characterized in that** said resting base (11) is constituted by a substantially annular body (22), comprising four walls that are opposite in pairs, said fork (13) being pivoted at a first front wall (28), the tubular elements (14, 15) being pivoted by means of the corresponding pivots (18, 19) to respective lateral walls, a second wall (29) and a third wall (30), said resting base (11) being completed by a fourth rear wall (31).

7. The bicycle rack according to claim 3, **characterized in that** said first slider (35) is constituted by a block of such dimensions as to affect both tubular elements (14, 15) of the fork (13) and has two opposite guiding channels (40, 41) shaped to allow the first slider (35) to slide on said tubular elements (14, 15).

8. The bicycle rack according to claim 7, **characterized in that** said reversible means (45) for locking said fork (13) in the inactive configuration comprise a second slider (46), arranged so as to slide on the tubular elements (14, 15) and provided with two lifting prevention tabs (47, 48) designed to be inserted in corresponding seats (49, 50) formed on the second rear wall (31).

9. The bicycle rack according claim 8, **characterized in that** said second slider (46) is constituted by a block of such dimensions as to affect both tubular elements (14, 15) of the fork (13) and has two opposite guiding channels (51, 52) shaped to allow the second slider (46) to slide on said tubular elements (14, 15).

## Patentansprüche

1. Ein Fahrradbodenständer (10), der Folgendes umfasst:
- einen Sockel (11) mit einer Positionieröffnung (12) für ein Rad eines Fahrrads oder dergleichen,
- eine Fallbremsgabel (13), die sich in einer aktiven Anordnung von dem Sockel (11) nach oben erstreckt und ausgebildet ist, um das seitliche Umfallen eines darin eingesetzten Rades zu verhindern; wobei die Fallbremsgabel (13) gelenkig mit dem Sockel verbunden und konstruiert ist, um entweder in einer inaktiven Anordnung angeordnet zu werden, auf den Sockel (11) eingeklappt, oder in der aktiven Anordnung, nach oben gedreht,
- wobei reversible Mittel zum Blockieren der Fallbremsgabel (13) in der aktiven Anordnung bereitgestellt sind,
**dadurch gekennzeichnet, dass** die reversiblen Mittel (34) zum Blockieren der Fallbremsgabel (13) in der aktiven Anordnung einen ersten Schieber (35) umfassen, der angeordnet ist, um auf rohrförmigen Elementen (14, 15) der Gabel (13) zu gleiten, und eine die Drehung verhindernde Nase (36) umfasst, die ausgebildet ist, um reversibel in einen komplementär geformten Sitz (37) eingesetzt zu werden, der in einer ersten Vorderwand (28) des Sockels (11) geformt ist.

2. Der Fahrradbodenständer gemäß Anspruch 1, **dadurch gekennzeichnet, dass** der Sockel (11) aus Kunststoffmaterial besteht.

3. Der Fahrradbodenständer gemäß einem oder mehreren der obigen Ansprüche, **dadurch gekennzeichnet, dass** er reversible Mittel umfasst, um die Gabel (13) in der inaktiven Anordnung zu blockieren.

4. Der Fahrradbodenständer gemäß einem oder mehreren der obigen Ansprüche, **dadurch gekennzeichnet, dass** die Gabel (13) aus den zwei rohrförmigen Elementen (14, 15) und einem Querträger (16) aus Kunststoffmaterial besteht.

5. Der Fahrradbodenständer gemäß einem oder mehreren der obigen Ansprüche, **dadurch gekennzeichnet, dass** die rohrförmigen Elemente (14, 15) jeweils ein erstes Ende (17, 27) haben, das durch entsprechende Drehzapfen (18, 19) gelenkig mit dem Sockel (11) verbunden ist, und ein zweites, gegenüberliegendes Ende (20, 21), das an dem Querträger (16) befestigt ist.

6. Der Fahrradbodenständer gemäß Anspruch 5, **dadurch gekennzeichnet, dass** der Sockel (11) aus einem im Wesentlichen ringförmigen Körper (22) besteht, der vier Wände umfasst, die einander in Paaren gegenüberliegen, wobei die Gabel (13) drehgelenkig mit einer ersten Vorderwand (28) verbunden ist, wobei die rohrförmigen Elemente (14, 15) durch entsprechende Drehzapfen (18, 19) drehgelenkig mit entsprechenden Seitenwänden, einer zweiten Wand (29) und einer dritten Wand (30), verbunden sind, wobei der Sockel (11) durch eine vierte Rückwand (31) vervollständigt wird.

7. Der Fahrradbodenständer gemäß Anspruch 3, **dadurch gekennzeichnet, dass** der erste Schieber (35) aus einem Block mit solchen Maßen besteht, dass er beide rohrförmige Elemente (14, 15) der Gabel (13) betrifft, und zwei gegenüberliegende Führungskanäle (40, 41) hat, die geformt sind, um es dem ersten Schieber (35) zu ermöglichen, auf den rohrförmigen Elementen (14, 15) zu gleiten.

8. Der Fahrradbodenständer gemäß Anspruch 7, **dadurch gekennzeichnet, dass** die reversiblen Mittel (45) zum Blockieren der Gabel (13) in der inaktiven Anordnung einen zweiten Schieber (46) umfassen, angeordnet, um auf den rohrförmigen Elementen (14, 15) zu gleiten, und mit zwei das Anheben verhindernden Vorsprüngen (47, 48) ausgestattet, die konstruiert sind, um in entsprechende Sitze (49, 50) eingeführt zu werden, welche in der zweiten Rückwand (31) geformt sind.

9. Der Fahrradbodenständer gemäß Anspruch 8, **dadurch gekennzeichnet, dass** der zweite Schieber (46) aus einem Block mit solchen Maßen besteht, dass beide rohrförmigen Elemente (14, 15) der Gabel (13) beeinflusst werden, und zwei gegenüberliegende Führungskanäle (51, 52) hat, die geformt sind, um es dem zweiten Schieber (46) zu ermöglichen, auf den rohrförmigen Elementen (14, 15) zu gleiten.

## Revendications

1. Porte-vélo au sol (10) comprenant :
une base d'appui (11) avec une ouverture de positionnement (12) pour une roue d'une bicyclette ou similaire,
une fourche antichute (13) qui est étendue vers le haut, dans une configuration active, à partir de ladite base d'appui (11) et est adaptée pour empêcher la chute latérale d'une roue insérée à l'intérieur de cette dernière, ladite fourche antichute (13) étant pivotée sur ladite base et conçue pour être agencée dans une configuration inactive, abaissée sur la base d'appui (11) ou dans une configuration active, entraînée en rotation vers le haut,
des moyens réversibles pour verrouiller ladite fourche antichute (13) dans la configuration active sont prévus,
**caractérisé en ce que** lesdits moyens réversibles (34) pour verrouiller ladite fourche antichute (13) dans la configuration active comprennent une première glissière (35) qui est agencée pour coulisser sur des éléments tubulaires (14, 15) de la fourche (13) et comprend une languette anti-rotation (36) adaptée pour être insérée, d'une manière réversible, dans un siège formé de manière complémentaire (37), formé sur une première paroi avant (28) de la base d'appui (11).

2. Porte-vélo selon la revendication 1, **caractérisé en ce que** ladite base d'appui (11) est réalisée à partir de matière plastique.

3. Porte-vélo selon une ou plusieurs des revendications précédentes, **caractérisé en ce qu'**il comprend des moyens réversibles pour verrouiller ladite fourche (13) dans la configuration inactive.

4. Porte-vélo selon une ou plusieurs des revendications précédentes, **caractérisé en ce que** ladite fourche (13) est composée de deux éléments tubulaires (14, 15) et d'une poutre de raccordement (16) réalisée à partir de matière plastique.

5. Porte-vélo selon une ou plusieurs des revendications précédentes, **caractérisé en ce que** lesdits éléments tubulaires (14, 15) ont chacun une première extrémité (17, 27) pivotée au moyen de pivots (18, 19) correspondants sur la base d'appui (11) et la seconde extrémité opposée (20, 21) fixée sur la poutre de raccordement (16).

6. Porte-vélo selon la revendication 5, **caractérisé en ce que** ladite base d'appui (11) est constituée par un corps sensiblement annulaire (22), comprenant quatre parois qui sont opposées deux par deux, ladite fourche (13) étant pivotée au niveau d'une première paroi avant (28), les éléments tubulaires (14, 15) étant pivotés au moyen de pivots (18, 19) correspondants par rapport aux parois latérales respectives, une deuxième paroi (29) et une troisième paroi (30), ladite base d'appui (11) étant complétée par une quatrième paroi arrière (31).

7. Porte-vélo selon la revendication 3, **caractérisé en ce que** ladite première glissière (35) est constituée par un bloc de dimensions telles qu'elles affectent les deux éléments tubulaires (14, 15) de la fourche (13) et a deux canaux de guidage (40, 41) opposés formés pour permettre à la première glissière (35) de coulisser sur lesdits éléments tubulaires (14, 15).

8. Porte-vélo selon la revendication 7, **caractérisé en ce que** lesdits moyens réversibles (45) pour verrouiller ladite fourche (13) dans la configuration inactive comprennent une seconde glissière (46) agencée afin de coulisser sur les éléments tubulaires (14, 15) et prévue avec deux languettes anti-levage (47, 48) conçues pour être insérées dans des sièges (49, 50) correspondants formés sur la deuxième paroi arrière (31).

9. Porte-vélo selon la revendication 8, **caractérisé en ce que** ladite seconde glissière (46) est constituée par un bloc de dimensions telles qu'elles affectent les deux éléments tubulaires (14, 15) de la fourche (13) et a deux canaux de guidage (51, 52) opposés formés pour permettre à la seconde glissière (46) de coulisser sur lesdits éléments tubulaires (14, 15).
